# FASCICULE DE BREVET EUROPEEN

(11) **EP 3 530 036 B1**
(45) Date de publication et mention de la délivrance du brevet: **07.04.2021**
(21) Numéro de dépôt: 17787191.0
(22) Date de dépôt: 23.10.2017
(51) Int. Cl.: H04W 12/00, H04W 12/06, H04W 12/08, H04W 48/16, H04W 48/02, H04W 48/08, H04W 84/12, H04W 88/16

(54) **PROCÉDÉ D'APPAIRAGE AUPRÈS D'UNE PASSERELLE**
PAARUNGSVERFAHREN AN EINEM GATEWAY
PAIRING METHOD AT A GATEWAY

(30) Priorité: 24.10.2016 FR 1660301
(43) Date de publication de la demande: 28.08.2019
(73) Titulaire: Sagemcom Broadband SAS, 92500 Rueil-Malmaison (FR)
(72) Inventeur: KORBER, Nicolas, 92500 Rueil Malmaison (FR)
(74) Mandataire: Cabinet Le Guen Maillet
(86) Numéro de dépôt international: PCT/EP2017/076951
(87) Numéro de publication internationale: WO 2018/077777

(56) Documents cités:
- EP-A1- 2 624 522
- EP-A1- 2 922 322
- EP-A2- 1 422 875
- US-A1- 2015 058 938
- US-A1- 2015 327 060
- US-B1- 7 480 939

## Description

La présente invention concerne un appairage d'un dispositif de communication auprès d'une passerelle pour accéder à des services offerts via un réseau étendu grâce à la passerelle.

La mise en place de réseaux locaux sans-fil WLAN (« Wireless Local Area Network » en anglais) offre une grande flexibilité aux utilisateurs de dispositifs de communication, tels que des ordinateurs, des tablettes, des téléphones intelligents, des dispositifs décodeurs STB (« Set-Top Box » en anglais), etc. De tels réseaux WLAN sont par exemple établis par les passerelles résidentielles RGW (« Residential GateWay » en anglais) mises à disposition par des fournisseurs d'accès Internet aux utilisateurs leur ayant souscrit un abonnement.

Afin de ne pas autoriser tout dispositif de communication à se connecter à un réseau WLAN et à avoir accès aux échanges de données intervenant via le réseau WLAN, des protocoles de sécurité sont mis en œuvre. Assurer la sécurité du réseau WLAN ne doit cependant pas se faire au détriment d'une simplicité de configuration.

Par exemple, dans le cadre d'un réseau Wi-Fi (marque déposée), le protocole WPS (« Wi-Fi Protected Setup » en anglais) peut être mis en œuvre. Le but du protocole WPS est que la phase de configuration pour sécuriser un réseau Wi-Fi soit simple, donc accessible à des utilisateurs sans connaissances particulières en configuration de réseau de communication. Le protocole WPS propose au moins trois manières de permettre à un dispositif de communication de s'appairer avec un point d'accès sans-fil WAP (« Wireless Access Point » en anglais), c'est-à-dire de récupérer auprès dudit point d'accès sans-fil WAP des clés de chiffrement permettant de communiquer de manière sécurisée au sein du réseau Wi-Fi (marque déposée) : la procédure d'appairage PIN (« Personal Identification Number » en anglais), la procédure d'appairage PBC (« Push-Button Configuration » en anglais) et la procédure d'appairage NFC (« Near Field Communication » en anglais).

La procédure d'appairage PIN repose sur un code PIN fourni par le dispositif de communication cherchant à se connecter au réseau Wi-Fi (marque déposée) ; ce code est alors saisi par un utilisateur via une interface utilisateur du point d'accès sans-fil WAP. A l'inverse, il est aussi possible de saisir un code PIN, fourni par le point d'accès sans-fil WAP, via une interface utilisateur du dispositif de communication cherchant à se connecter au réseau Wi-Fi (marque déposée). Cependant, en 2011, le chercheur Stefan Viehböck a mis en évidence une faille de sécurité importante dans la procédure d'appairage PIN, ce qui la rend aujourd'hui non recommandée.

La procédure d'appairage PBC repose sur le fait que l'utilisateur appuie sur un bouton, qu'il soit physique ou virtuel, à la fois sur le point d'accès sans-fil WAP et sur le dispositif de communication à connecter au réseau Wi-Fi (marque déposée) sécurisé. La procédure d'appairage PBC est ainsi telle que le point d'accès sans-fil WAP fournit ainsi, pendant un laps de temps de durée prédéfinie et à tout dispositif de communication en faisant la requête, une autorisation systématique d'appairage. Cette approche, bien que simple à exécuter, nécessite des manipulations à la fois sur le dispositif de communication à connecter au réseau Wi-Fi (marque déposée) sécurisé et sur le point d'accès sans-fil WAP. De plus, cette approche souffre aussi d'une faille de sécurité importante.

La procédure d'appairage NFC repose sur le fait que l'utilisateur approche le dispositif de communication à connecter au réseau Wi-Fi (marque déposée) auprès du point d'accès WAP pour établir une communication en champ proche. La procédure d'appairage NFC est ainsi telle que le point d'accès sans-fil WAP fournit ainsi, à tout dispositif de communication en faisant la requête par communication en champ proche NFC, une autorisation systématique d'appairage. Cette approche est particulièrement pratique pour des dispositifs de communication de petite taille, *e.g.* qui tiennent dans la main. Cette approche est toutefois contraignante en ce qui concerne des dispositifs alimentés sur secteur, que l'utilisateur souhaite installer à distance du point d'accès sans-fil WAP, *e.g.* pour installer un dispositif décodeur STB mis à disposition par le fournisseur d'accès Internet qui a aussi fourni à l'utilisateur en question la passerelle résidentielle RGW agissant comme point d'accès sans-fil WAP.

Le document EP 2 624 522 A1 décrit un système 10 (illustré à la figure 1) et un procédé permettant de faciliter l'accès d'un terminal mobile à un point d'accès public sans fil. Le terminal mobile et le point d'accès sont pré-provisionnés chacun avec un paramètre de sécurité qui leur permet d'effectuer un processus d'authentification; le système 10 comprenant un nœud d'accès 12 pour un réseau WLAN 14, qui est connecté à L'Internet 15 par l'intermédiaire d'une passerelle de réseau à large bande 17. Le système 10 comprend en outre un point d'accès 16 pour un réseau LTE, qui fournit également une connectivité à L'Internet 15 via une passerelle de réseau de données par paquets (PDN) 22. Le système 10 comprend également deux points d'accès WLAN supplémentaires 13a et 13b, qui peuvent être des points d'accès "publics". Alors que le terminal mobile 30 est capable de communiquer avec les points d'accès WLAN 13A et 13b sur les interfaces 41 a et 41 b, respectivement, le terminal mobile 30 est généralement incapable d'obtenir des services du réseau LTE/SAE via ces points d'accès à moins qu'il n'ait été correctement authentifié à ces points d'accès.

Le document US 2015/058938 A1 décrit un procédé d'authentification entre un nœud mobile et une passerelle. Le nœud mobile envoie à la passerelle une demande d'accès internet comprenant un identifiant mobile et des informations sur le protocole d'authentification, ce qui permet à la passerelle d'authentifier le nœud mobile et d'établir une connexion internet avec le nœud mobile.

Il est souhaitable de pallier ces inconvénients de l'état de la technique. Il est ainsi souhaitable de fournir une solution qui soit encore plus simple du point de vue utilisateur, et qui soit sécurisée. Il est notamment souhaitable de fournir une solution qui évite de demander à l'utilisateur d'avoir à effectuer des manipulations à la fois sur la passerelle résidentielle RGW agissant comme point d'accès sans-fil WAP et sur le dispositif de communication à connecter au réseau sans-fil WLAN.

L'invention concerne un procédé d'appairage dans lequel une passerelle sert de point d'accès sans-fil à au moins un premier réseau local sans-fil sécurisé et à un second réseau local sans-fil sécurisé, la passerelle interconnectant le second réseau local sans-fil sécurisé et un réseau étendu de sorte que chaque dispositif de communication appairé avec le second réseau local sans-fil sécurisé peut accéder à des services offerts via le réseau étendu, un serveur d'approvisionnement étant connecté au réseau étendu. Le procédé est implémenté par la passerelle et est tel que défini par la revendication 1.

Ainsi, en s'appuyant sur ce premier réseau local sans-fil sécurisé, l'appairage peut être réalisé sans manipulation de l'utilisateur. L'approche proposée permet de ne pas avoir à communiquer en usine, pour la production des dispositifs susceptibles d'être ultérieurement appairés avec le second réseau local sans-fil sécurisé, les données d'authentification dudit second réseau local sans-fil sécurisé (ce qui imposerait de produire et configurer ces dispositifs à la demande, de manière customisée pour chaque utilisateur). L'appairage d'un dispositif de communication (e.g. dispositif décodeur) pour accéder aux services (e.g. IPTV) offerts via le réseau étendu est ainsi simple lorsque ledit dispositif de communication est fourni à l'utilisateur par le fournisseur d'accès Internet qui a fourni la passerelle. De plus, le premier réseau local sans-fil sécurisé est spécialisé pour chaque dispositif de communication identifié comme susceptible d'appairage (fourni à l'utilisateur par le fournisseur d'accès Internet qui a fourni la passerelle). La sécurité d'appairage est ainsi renforcée.

Selon un mode de réalisation particulier, lorsque le second appairage avec le second réseau local sans-fil sécurisé pour un dispositif de communication parmi ledit ensemble de dispositifs de communication susceptibles d'appairage est confirmé, la passerelle arrête le premier réseau local sans-fil sécurisé créé pour ledit dispositif de communication. La sécurité d'appairage est ainsi encore renforcée, et des économies de ressources sont effectuées.

Selon un mode de réalisation particulier, chaque premier réseau local sans-fil sécurisé et le second réseau local sans-fil sécurisé sont de type Wi-Fi. Ainsi, l'invention peut bénéficier à un large panel de produits utilisés à titre personnel et/ou à titre professionnel.

L'invention concerne également une passerelle configurée pour servir de point d'accès sans-fil à au moins un premier réseau local sans-fil sécurisé et à un second réseau local sans-fil sécurisé, la passerelle interconnectant le second réseau local sans-fil sécurisé et un réseau étendu de sorte que chaque dispositif de communication appairé avec le second réseau local sans-fil sécurisé peut accéder à des services offerts via le réseau étendu, un serveur d'approvisionnement étant connecté au réseau étendu. La passerelle est telle que défini par la revendication 6.

L'invention concerne également un programme d'ordinateur, qui peut être stocké sur un support et/ou téléchargé d'un réseau de communication, afin d'être lu par un processeur d'une passerelle telle définie ci-dessus. Ce programme d'ordinateur comprend des instructions pour implémenter l'un ou l'autre des procédés mentionnés ci-dessus dans l'un quelconque de leurs modes de réalisation, lorsque ledit programme est exécuté par le processeur. L'invention concerne également un support de stockage d'informations stockant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- les Figs. 1A à 1C illustrent schématiquement une évolution de configuration d'un système de communication sans-fil dans lequel la présente invention est implémentée ;
- la Fig. 2 illustre schématiquement un exemple d'architecture matérielle d'une passerelle dudit système de communication sans-fil ;
- la Fig. 3 illustre schématiquement un algorithme d'appairage implémenté par un dispositif de communication ;
- la Fig. 4 illustre schématiquement un algorithme d'appairage implémenté par ladite passerelle, selon un premier mode de réalisation correspondant à l'invention revendiquée ; et
- la Fig. 5 illustre schématiquement un algorithme d'appairage implémenté par ladite passerelle, selon un second mode de réalisation ne faisant pas partie de l'invention revendiquée.

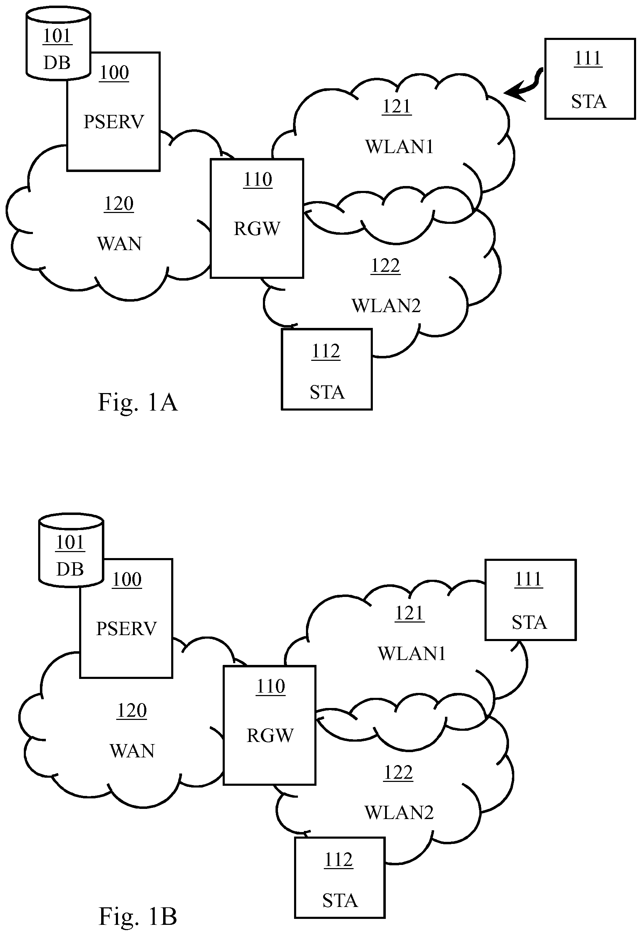

La **Fig. 1A** illustre schématiquement un système de communication sans-fil comportant une passerelle, comme par exemple une passerelle résidentielle RGW 110, et un serveur d'approvisionnement (« provisioning server» en anglais) PSERV 100 faisant typiquement partie d'un système de support opérationnel OSS (« Operational Support System » en anglais).

La passerelle RGW 110 est configurée pour communiquer avec le serveur d'approvisionnement PSERV 100 via un réseau étendu WAN 120, qui est typiquement l'Internet. Par exemple, la passerelle RGW 110 communique avec le serveur d'approvisionnement PSERV 100 en utilisant le protocole SNMP (« Simple Network Management Protocol » en anglais, tel que défini dans le document normatif RFC 1157), ou le protocole TR-069, aussi appelé CWMP (« CPE WAN Management Protocol » en anglais, où CPE signifie « Customer-Premises Equipment »).

La passerelle RGW 110 est configurée pour créer et gérer au moins deux réseaux locaux sans-fil WLAN sécurisés. Chacun de ces réseaux locaux sans-fil WLAN est sécurisé en ce que l'appairage avec ledit réseau local sans-fil WLAN requiert que tout dispositif de communication souhaitant communiquer via ledit réseau local sans-fil WLAN soit authentifié grâce à des données d'authentification. Ces données d'authentification sont typiquement un secret pré-partagé, aussi appelé clef pré-partagée PSK (« Pre-Shared Key » en anglais), connu par un autre biais par la passerelle RGW 110 et que ledit dispositif de communication doit communiquer à la passerelle RGW 110 pour être authentifié.

Considérons que la passerelle RGW 110 crée et gère un réseau local sans-fil sécurisé WLAN1 121 et un réseau local sans-fil sécurisé WLAN2 122. La passerelle RGW 110 a ainsi un rôle de point d'accès sans-fil WAP vis-à-vis du réseau local sans-fil sécurisé WLAN1 121 et du réseau local sans-fil sécurisé WLAN2 122. Le réseau local sans-fil sécurisé WLAN1 121 et le réseau local sans-fil sécurisé WLAN2 122 sont préférentiellement des réseaux locaux sans-fil WLAN sécurisés de type Wi-Fi (marque déposée).

Le réseau local sans-fil sécurisé WLAN1 121 dispose d'un identifiant réseau, appelé SSID (« Service Set Identifier » en anglais) selon la terminologie Wi-Fi (marque déposée), qui est distinct d'un autre identifiant réseau affecté au réseau local sans-fil sécurisé WLAN2 122. La passerelle RGW 110, dans son rôle de point d'accès sans-fil, diffuse l'identifiant réseau de chacun de ces réseaux locaux sans-fil sécurisés WLAN dans des balises (« beacon » en anglais) respectives.

Le réseau local sans-fil sécurisé WLAN2 122 est destiné à permettre à l'utilisateur d'accéder à des services offerts via le réseau étendu WAN 120 par le fournisseur d'accès Internet. L'utilisateur utilise alors des dispositifs de communication sans-fil, tels que des tablettes ou des dispositifs décodeurs STB, qui sont connectés au réseau local sans-fil sécurisé WLAN2 122 pour accéder à ces services (navigation web, visualisation de contenu audiovisuel à la demande, etc.), la passerelle RGW 110 servant alors de relais entre le réseau étendu WAN 120 et le réseau local sans-fil sécurisé WLAN2 122. Autrement dit, la passerelle RGW 110 sert de dispositif d'interconnexion entre le réseau étendu WAN 120 et le réseau local sans-fil sécurisé WLAN2 122. La Fig. 1A montre un dispositif de communication sans-fil 112, aussi appelé station STA, connecté au réseau local sans-fil WLAN2 122 et donc appairé avec le réseau local sans-fil sécurisé WLAN2 122.

Comme détaillé par la suite, le réseau local sans-fil sécurisé WLAN1 121 est destiné à permettre de faciliter des opérations d'appairage avec le réseau local sans-fil sécurisé WLAN2 122 pour des dispositifs de communication sans-fil fournis par le fournisseur d'accès Internet à l'utilisateur, comme par exemple un ou plusieurs dispositifs décodeurs STB permettant d'accéder à des services de type IPTV (« Internet Protocol Télévision » en anglais). Le réseau local sans-fil sécurisé WLAN1 121 est donc considéré comme un outil de gestion, et préférentiellement, la passerelle RGW 110 n'effectue pas d'interconnexion entre le réseau étendu WAN 120 et le réseau local sans-fil sécurisé WLAN1 121. En d'autres termes, la passerelle RGW 110 ne permet pas à l'utilisateur d'accéder, par le biais du réseau local sans-fil sécurisé WLAN1 121, aux services offerts via le réseau étendu WAN 120 par le fournisseur d'accès Internet. La Fig. 1A montre un dispositif de communication sans-fil 111, aussi appelé station STA, qui a été fourni par le fournisseur d'accès Internet ayant aussi fourni la passerelle RGW 110 et qui cherche à s'appairer avec le réseau local sans-fil sécurisé WLAN1 121, afin d'être appairé à terme avec le réseau local sans-fil sécurisé WLAN2 122.

Le serveur d'approvisionnement PSERV 100 comporte, ou est connecté à, une base de données DB 101. La base de données DB 101 stocke un descriptif de souscription pour chaque utilisateur ayant souscrit un abonnement auprès du fournisseur d'accès Internet auquel le système de support opérationnel OSS est associé. La base de données DB 101 stocke, pour chaque utilisateur, un identifiant (*e.g*. adresse MAC (« Médium Access Control » en anglais) associé à chaque dispositif qui a été fourni par le fournisseur d'accès Internet audit utilisateur dans le cadre de sa souscription. La base de données DB 101 stocke ainsi notamment, pour chaque utilisateur, un identifiant associé à une passerelle RGW qui a été fournie par le fournisseur d'accès Internet audit utilisateur dans le cadre de sa souscription. La base de données DB 101 stocke aussi ainsi, pour chaque utilisateur, un identifiant associé à chaque autre dispositif qui a été fourni par le fournisseur d'accès Internet audit utilisateur et qui est susceptible d'être ultérieurement appairé avec le réseau local sans-fil sécurisé WLAN2 122 pour bénéficier des services offerts via le réseau étendu WAN 120 par le fournisseur d'accès Internet. Comme abordé par la suite, la base de données DB 101 peut stocker, pour chaque utilisateur, d'autres informations relatives à chaque dispositif qui a été fourni par le fournisseur d'accès Internet audit utilisateur.

La **Fig. 1B** illustre schématiquement une évolution du système de communication sans-fil, dans laquelle le dispositif STA 111 a réussi à se connecter au réseau local sans-fil sécurisé WLAN1 121 et à être appairé avec le réseau local sans-fil sécurisé WLAN1 121. L'appairage avec le réseau local sans-fil sécurisé WLAN1 121 est effectué grâce à des premières données d'authentification qui ont été précédemment stockées en mémoire du dispositif STA 111, par exemple par configuration en usine ou par connexion au dispositif STA 111 d'une mémoire externe stockant lesdites premières données d'authentification. Comme détaillé ci-après, pour pouvoir effectuer l'appairage du dispositif STA 111 avec le réseau local sans-fil sécurisé WLAN1 121, la passerelle RGW 110 obtient auprès du serveur d'approvisionnement PSERV 100 des informations permettant d'assurer que le dispositif STA 111 est en droit d'être appairé avec le réseau local sans-fil WLAN1 121 afin de recevoir ensuite des secondes données d'authentification permettant l'appairage avec le réseau local sans-fil sécurisé WLAN2 122.

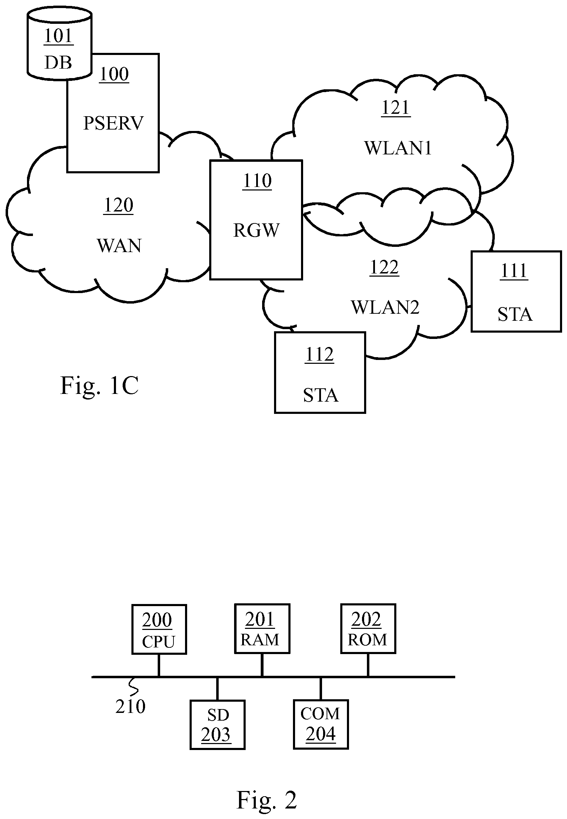

La **Fig.** 1C illustre schématiquement une évolution ultérieure du système de communication sans-fil, dans laquelle le dispositif STA 111 a réussi à être appairé avec le réseau local sans-fil sécurisé WLAN2 122 grâce aux secondes données d'authentification obtenues par le dispositif STA 111 via le réseau local sans-fil sécurisé WLAN1 121. Le dispositif STA 111 est alors en situation d'accéder aux services offerts via le réseau étendu WAN 120 par le fournisseur d'accès Internet.

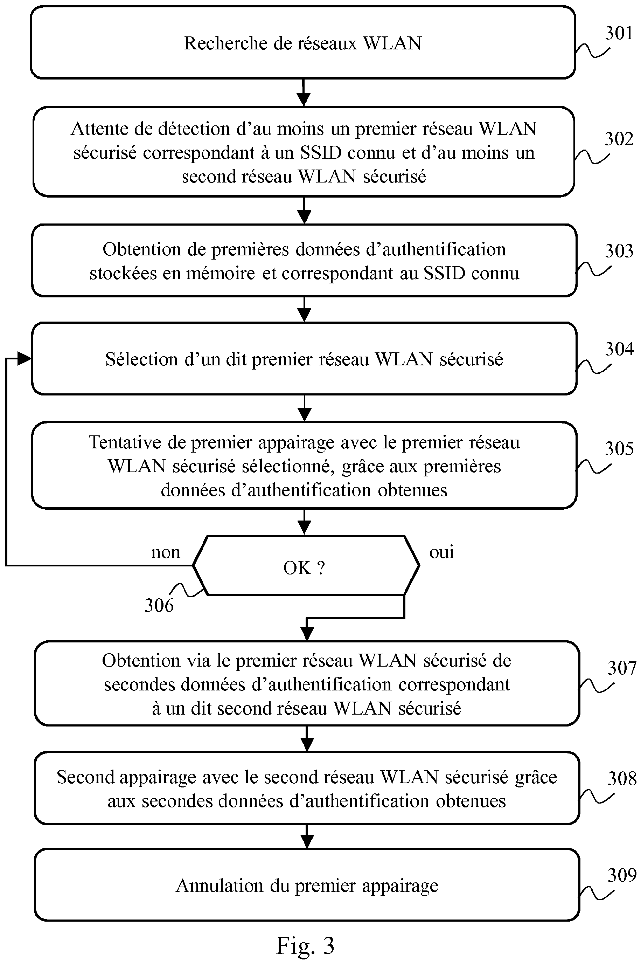

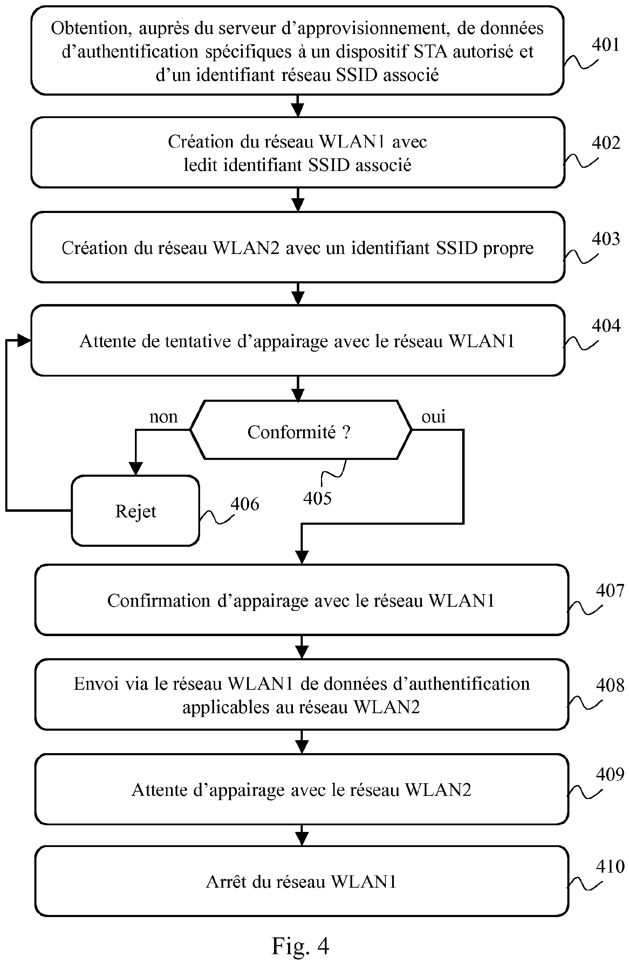

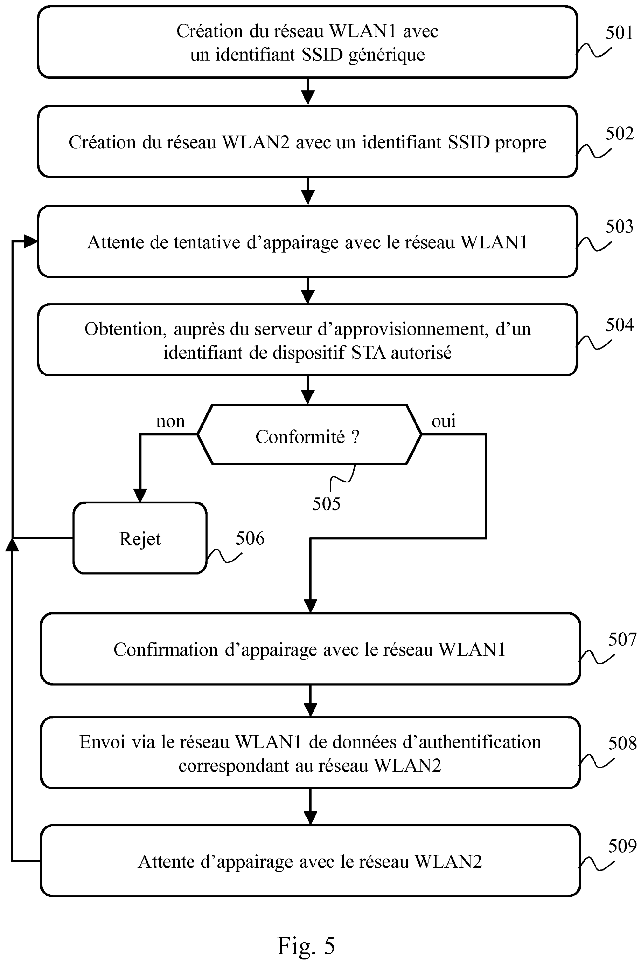

Un algorithme, implémenté par le dispositif STA 111, permettant l'évolution du système de communication sans-fil présentée sur les Figs. 1A à 1C est décrit ci-après en relation avec la Fig. 3. Un premier mode de réalisation d'un algorithme, implémenté par la passerelle RGW 110, permettant l'évolution du système de communication sans-fil présentée sur les Figs. 1A à 1C est décrit ci-après en relation avec la Fig. 4. Un second mode de réalisation de l'algorithme, implémenté par la passerelle RGW 110, permettant l'évolution du système de communication sans-fil présentée sur les Figs. 1A à 1C est décrit ci-après en relation avec la Fig. 5.

La Fig. 2 illustre schématiquement un exemple d'architecture matérielle de la passerelle RGW 110.

La passerelle RGW 110 comporte alors, reliés par un bus de communication 210 : un processeur ou CPU (« Central Processing Unit» en anglais) 200 ; une mémoire vive RAM (« Random Access Memory » en anglais) 201 ; une mémoire morte ROM (« Read Only Memory » en anglais) 202 ; une unité de stockage ou un lecteur de support de stockage, tel qu'un lecteur de cartes SD (« Secure Digital » en anglais) 203 ou un disque dur HDD (« Hard Disk Drive » en anglais) ; et un ensemble d'interfaces de communication COM 204, permettant notamment à la passerelle RGW 110 de communiquer via le réseau étendu WAN 120, et de gérer le réseau local sans-fil sécurisé WLAN1 121 et le réseau local sans-fil sécurisé WLAN2 122.

Le processeur 200 est capable d'exécuter des instructions chargées dans la RAM 201 à partir de la ROM 202, d'une mémoire externe (telle qu'une carte SD), d'un support de stockage (tel qu'un disque dur HDD), ou d'un réseau de communication (tel que le réseau étendu WAN 120). Lorsque la passerelle RGW 110 est mise sous tension, le processeur 200 est capable de lire de la RAM 201 des instructions et de les exécuter. Ces instructions forment un programme d'ordinateur causant la mise en œuvre, par le processeur 200, de tout ou partie des algorithmes et étapes décrits ci-après en relation avec la passerelle RGW 110.

Ainsi, tout ou partie des algorithmes et étapes décrits ci-après en relation avec la passerelle RGW 110 peut être implémenté sous forme logicielle par exécution d'un ensemble d'instructions par une machine programmable, telle qu'un DSP (« Digital Signal Processor » en anglais) ou un microcontrôleur. Tout ou partie des algorithmes et étapes décrits ci-après peut aussi être implémenté sous forme matérielle par une machine ou un composant dédié, tel qu'un FPGA (« Field-Programmable Gate Array » en anglais) ou un ASIC (« Application-Specific Integrated Circuit » en anglais).

A noter que le dispositif STA 111 peut suivre la même architecture matérielle et le serveur d'approvisionnement PSERV 100 peut aussi suivre la même architecture matérielle.

La **Fig. 3** illustre schématiquement un algorithme d'appairage implémenté par le dispositif STA 111, dans le cadre de la présente invention.

Dans une étape 301, le dispositif STA 111 active une recherche de réseaux WLAN à portée radio. Par exemple, le dispositif STA 111 se met à l'écoute de balises qui seraient transmises par des points d'accès sans-fil WAP à portée radio du dispositif STA 111. Selon un autre exemple, le dispositif STA 111 transmet un message de requête sonde (« Probe Request » en anglais) demandant à ce que chaque point d'accès sans-fil WAP à portée radio du dispositif STA 111 annonce dans un message de réponse sonde (« Probe Response » en anglais) chaque réseau local sans-fil WLAN mis à disposition par ledit point d'accès sans-fil WAP.

Dans une étape 302, le dispositif STA 111 se met en attente de détection d'au moins un premier réseau local sans-fil WLAN sécurisé ayant un identifiant de réseau SSID connu du dispositif STA 111. Cet identifiant de réseau a été préalablement stocké en mémoire du dispositif STA 111, par exemple par configuration en usine ou par connexion au dispositif STA 111 d'une mémoire externe stockant ledit identifiant de réseau.

Dans l'étape 302, le dispositif STA 111 est supposé détecter aussi au moins un second réseau local sans-fil WLAN sécurisé. Sinon, cela signifie que le dispositif STA 111 n'est pas géographiquement à un endroit approprié.

Considérons à cet instant que le dispositif STA 111 est à portée radio de la passerelle RGW 110 et donc dans la zone de couverture du réseau local sans-fil sécurisé WLAN1 121 et du réseau local sans-fil sécurisé WLAN2 122. Considérons aussi que l'identifiant réseau SSID du réseau local sans-fil sécurisé WLAN1 121 correspond à celui recherché par le dispositif STA 111. Cet aspect est abordé à nouveau ci-après en relation avec les Figs. 5 et 6.

Dans une étape 303, le dispositif STA 111 obtient des premières données d'authentification correspondant audit identifiant réseau SSID qui était déjà connu du dispositif STA 111 au démarrage de l'algorithme de la Fig. 3. Ces premières données d'authentification ont aussi été préalablement stockées en mémoire du dispositif STA 111, par exemple aussi par configuration en usine ou par connexion au dispositif STA 111 d'une mémoire externe stockant lesdits premières données d'authentification.

Ces premières données d'authentification permettent au dispositif STA 111, fourni par le fournisseur d'accès Internet ayant aussi fourni la passerelle RGW 110, d'être authentifié dans le cadre de l'appairage avec le réseau local sans-fil sécurisé WLAN1 121. Préférentiellement, ces premières données d'authentification sont un secret. Ces premières données d'authentification peuvent être accompagnées d'un type de chiffrement (par exemple WPA (« Wi-Fi Protected Access » en anglais) ou WPA2) associé.

Dans une étape 304, le dispositif STA 111 sélectionne un premier réseau local sans-fil WLAN sécurisé parmi les premiers réseaux locaux sans-fil sécurisés WLAN qui ont été détectés à l'étape 302.

En effet, il se peut que plusieurs réseaux locaux sans-fil WLAN aient un même identifiant réseau SSID, voire même que les mêmes données d'authentification soient applicables via différents réseaux locaux sans-fil sécurisés WLAN ayant ce même identifiant réseau SSID. Cet aspect est abordé à nouveau ci-après en relation avec la Fig. 3.

Dans une étape 305, le dispositif STA 111 effectue une tentative de premier appairage avec le premier réseau local sans-fil WLAN sécurisé sélectionné à l'étape 304. En d'autres termes, le dispositif STA 111 transmet, au point d'accès WAP gérant le premier réseau local sans-fil WLAN sécurisé sélectionné à l'étape 304, les premières données d'authentification stockées en mémoire du dispositif STA 111 en correspondance avec l'identifiant réseau SSID en question. Typiquement, le dispositif STA 111 transmet la clef pré-partagée PSK déjà évoquée. Chaque message envoyé par le dispositif STA 111 dans cette tentative de premier appairage identifie sans ambiguïté le dispositif STA 111 en tant que source dudit message (e.g. grâce à son adresse MAC).

Dans une étape 306, le point d'accès WAP gérant le premier réseau local sans-fil WLAN sécurisé sélectionné à l'étape 304 répond au dispositif STA 111 et le dispositif STA 111 vérifie si la tentative de premier appairage effectuée à l'étape 305 a été un succès. Si tel est le cas (ce qui signifie que le premier réseau local sans-fil WLAN sécurisé en question est effectivement le réseau local sans-fil sécurisé WLAN1 121 géré par la passerelle RGW 110), une étape 307 est effectuée ; sinon, l'étape 304 est réitérée, en sélectionnant un autre premier réseau local sans-fil WLAN sécurisé dont l'identifiant réseau SSID correspond à celui recherché par le dispositif STA 111. Si tous les premiers réseaux locaux sans-fil sécurisés WLAN qui ont été détectés à l'étape 302 ont été passés en revue, l'étape 301 est réitérée, à la recherche d'au moins un autre réseau local sans-fil WLAN sécurisé dont l'identifiant réseau SSID correspond à celui recherché par le dispositif STA 111 (non montré sur la Fig. 3).

Dans l'étape 307, le dispositif STA 111 obtient, via le premier réseau local sans-fil WLAN sécurisé avec lequel le dispositif STA 111 est désormais appairé (*i.e.* le réseau local sans-fil sécurisé WLAN1 121), des secondes données d'authentification applicables à un second réseau local sans-fil WLAN sécurisé (*i.e.* le réseau local sans-fil sécurisé WLAN2 122) établi par la même passerelle RGW (*i.e.* la passerelle RGW 110). Ces secondes données d'authentification sont accompagnées de l'identifiant réseau SSID du réseau local sans-fil sécurisé WLAN2 122. Comme détaillé par la suite en relation avec les Figs. 5 et 6, le fait que le premier appairage ait été un succès assure que le dispositif STA 111 a effectivement été fourni au même utilisateur que la passerelle RGW en question (*i.e.* la passerelle RGW 110).

Ces secondes données d'authentification permettent au dispositif STA 111 d'être authentifié dans le cadre de l'appairage avec le réseau local sans-fil sécurisé WLAN2 122. Préférentiellement, ces secondes données d'authentification sont un secret. Ces secondes données d'authentification peuvent être accompagnées d'un type de chiffrement (par exemple WPA ou WPA2) associé.

Ces secondes données d'authentification et l'identifiant réseau SSID qui les accompagne sont préférentiellement transmis au dispositif STA 111 selon un protocole propriétaire, reposant par exemple sur le protocole TCP (« Transmission Control Protocol » en anglais) ou sur le protocole SNMP.

Dans une étape 308, le dispositif STA 111 effectue un second appairage avec le second réseau local sans-fil WLAN en question. En d'autres termes, le dispositif STA 111 transmet, à la passerelle RGW gérant le second réseau local sans-fil WLAN sécurisé en question, les secondes données d'authentification reçues à l'étape 307. Typiquement, le dispositif STA 111 transmet la clef pré-partagée PSK déjà évoquée. L'appairage est censé se dérouler avec succès, étant donné que ces secondes données d'authentification ont été transmises par la passerelle RGW concernée *(i.e.* la passerelle RGW 110) pour permettre au dispositif STA 111 d'être authentifié dans le cadre de l'appairage avec le réseau local sans-fil sécurisé WLAN2 122. Le dispositif STA 111 est alors en situation d'accéder aux services offerts via le réseau étendu WAN 120 par le fournisseur d'accès Internet.

Dans une étape optionnelle 309, le dispositif STA 111 se déconnecte du réseau local sans-fil WLAN1 121, et annule le premier appairage.

La **Fig. 4** illustre schématiquement un algorithme d'appairage implémenté par la passerelle RGW 110, selon un premier mode de réalisation correspondant à l'invention revendiquée. Dans ce premier mode de réalisation, il est considéré que chaque dispositif de communication STA fourni par le fournisseur d'accès Internet dispose de ses propres données d'authentification (premières données d'authentification dans le cadre de l'algorithme de la Fig. 3). Typiquement, chaque dispositif de communication STA fourni par le fournisseur d'accès Internet stocke en mémoire une clef pré-partagée PSK qui lui est propre, qui a par exemple été générée aléatoirement en production. De plus, il est considéré que chaque dispositif de communication STA fourni par le fournisseur d'accès Internet stocke en mémoire un identifiant réseau SSID (pour lequel lesdites données d'authentification sont applicables) qui lui est propre.

Dans une étape 401, la passerelle RGW 110 obtient, auprès du serveur d'approvisionnement PSERV 100, un descriptif associé à chaque dispositif de communication STA fourni par le fournisseur d'accès Internet au même utilisateur que la passerelle RGW 110. Le fournisseur d'accès Internet maintient donc à jour la base de données DB 101 de sorte que le descriptif de souscription pour chaque utilisateur indique chaque dispositif de communication STA fourni par le fournisseur d'accès Internet audit utilisateur. Le serveur d'approvisionnement PSERV 100 peut identifier quel utilisateur est concerné en se basant sur l'identifiant de la passerelle RGW 110. Le descriptif reçu à l'étape 401 inclut un identifiant (e.g. adresse MAC) du dispositif de communication STA en question. Le descriptif reçu à l'étape 401 en outre des données d'authentification qui sont applicables audit dispositif de communication STA dans le cadre de l'appairage avec le réseau local sans-fil sécurisé WLAN1 121, ainsi qu'un identifiant réseau SSID avec lequel ledit dispositif de communication STA s'attend à devoir utiliser lesdites données d'authentification (ce sont donc les premières données d'authentification telles qu'utilisées dans le cadre de l'algorithme de la Fig. 3).

L'étape 401 est par exemple déclenchée à l'allumage de la passerelle RGW 110 ou lors d'une réinitialisation de la passerelle RGW 110. L'étape 401 peut aussi être déclenchée sur réception d'un message de la part du serveur d'approvisionnement PSERV 100, par exemple lorsque le fournisseur d'accès Internet fournit un nouveau dispositif de communication STA au même utilisateur que la passerelle RGW 110. L'étape 401 peut aussi être déclenchée par interrogation régulière du serveur d'approvisionnement PSERV 100 par la passerelle RGW 110 et détection que le fournisseur d'accès Internet a fourni un nouveau dispositif de communication STA au même utilisateur que la passerelle RGW 110. Considérons à titre illustratif qu'un seul dispositif de communication STA a été fourni audit utilisateur en plus de la passerelle RGW 110.

Dans une étape 402, la passerelle RGW 110 crée le réseau local sans-fil WLAN1 121, en lui attribuant l'identifiant réseau SSID mentionné dans le descriptif reçu à l'étape 401. Si plusieurs dispositifs de communication STA ont été fournis audit utilisateur en plus de la passerelle RGW 110 (et donc susceptibles d'appairage), la passerelle RGW 110 crée ainsi un réseau local sans-fil WLAN1 121 pour chacun de ces dispositifs de communication STA.

Dans une étape 403, la passerelle RGW 110 crée le réseau local sans-fil WLAN2 122, en lui attribuant un identifiant réseau SSID qui lui est propre (typiquement cet identifiant réseau SSID est aussi inscrit sur le boîtier de la passerelle RGW 110). L'identifiant réseau SSID du réseau local sans-fil WLAN2 122 est typiquement inscrit en mémoire de la passerelle RGW 110 en usine, mais peut aussi être modifié par l'utilisateur grâce à un portail de configuration exporté par un serveur Web embarqué par la passerelle RGW 110.

A noter que le réseau local sans-fil WLAN2 122 peut tout à fait être créé avant le réseau local sans-fil WLAN1 121.

Dans une étape 404, la passerelle RGW 110 se met en attente d'une tentative de premier appairage avec le réseau local sans-fil WLAN1 121. La passerelle RGW 110 se met donc en attente de recevoir des premières données d'authentification devant permettre d'appairer un dispositif de communication STA qui a été fourni audit utilisateur par le fournisseur d'accès Internet.

Dans une étape 405, la passerelle RGW 110 a détecté une tentative de premier appairage avec le réseau local sans-fil WLAN1 121. La passerelle RGW 110 analyse si cette tentative de premier appairage provient d'un dispositif de communication STA qui correspond à celui dont le descriptif a été obtenu à l'étape 401 et qui est associé à l'identifiant réseau SSID du réseau local sans-fil WLAN1 121 d'après ledit descriptif. Dans sa tentative d'appairage, le dispositif de communication STA en question est identifié et a fourni des premières données d'authentification qui sont censées correspondre à celles fournies dans le descriptif reçu à l'étape 401. Si tel est le cas, la passerelle RGW 110 considère que la tentative de premier appairage avec le réseau local sans-fil WLAN1 121 est conforme, et une étape 407 est alors effectuée. Sinon, la passerelle RGW 110 considère que la tentative de premier appairage avec le réseau local sans-fil WLAN1 121 n'est pas conforme, et une étape 406 est alors effectuée.

Dans l'étape 406, la passerelle RGW 110 rejette le premier appairage avec le réseau local sans-fil WLAN1 121, et en informe le dispositif de communication STA en question. La passerelle RGW 110 se remet alors en attente d'une tentative de premier appairage avec le réseau local sans-fil WLAN1 121, en réitérant l'étape 404.

Dans l'étape 407, la passerelle RGW 110 accepte le premier appairage avec le réseau local sans-fil sécurisé WLAN1 121 et confirme le succès du premier appairage auprès du dispositif de communication STA en question. Le fait que le premier appairage ait été un succès assure que le dispositif STA en question a effectivement été fourni au même utilisateur que la passerelle RGW 110, puisque ledit dispositif de communication STA était explicitement identifié dans le descriptif reçu à l'étape 401.

Dans une étape 408, la passerelle RGW 110 envoie au dispositif de communication STA en question des secondes données d'authentification via le réseau local sans-fil sécurisé WLAN1 121. Ces secondes données d'authentification sont accompagnées de l'identifiant réseau SSID du réseau local sans-fil sécurisé WLAN2 122.

Ces secondes données d'authentification permettent au dispositif de communication STA en question d'être authentifié dans le cadre de l'appairage avec le réseau local sans-fil sécurisé WLAN2 122. Préférentiellement, ces secondes données d'authentification sont un secret. Ces secondes données d'authentification peuvent être accompagnées d'un type de chiffrement (par exemple WPA ou WPA2) associé.

Comme déjà évoqué, ces secondes données d'authentification et l'identifiant réseau SSID qui les accompagne sont préférentiellement transmis au dispositif de communication STA en question selon un protocole propriétaire, reposant par exemple sur le protocole TCP ou sur le protocole SNMP.

Dans une étape 409, la passerelle RGW 110 se met en attente de second appairage avec le réseau local sans-fil sécurisé WLAN2 122. Le dispositif de communication STA en question est censé utiliser les secondes données d'authentification transmises à l'étape 408. Si tel est le cas, une étape optionnelle 410 est mise en œuvre. Sinon, l'étape 409 est réitérée (non montré sur la Fig. 4).

Dans l'étape optionnelle 410, la passerelle RGW 110 arrête le réseau local sans-fil sécurisé WLAN1 121 (plus aucun dispositif de communication STA n'est censé tenter d'effectuer un appairage avec un réseau local sans-fil WLAN sécurisé ayant l'identifiant SSID qui a été utilisé pour identifier le réseau local sans-fil sécurisé WLAN1 121).

Si plusieurs dispositifs de communication STA ont été fournis audit utilisateur en plus de la passerelle RGW 110 (et donc susceptibles d'appairage), la passerelle RGW 110 arrête dans l'étape 410 le réseau local sans-fil WLAN1 121 qui avait été créé pour le dispositif de communication STA dont le second appairage a réussi. L'étape 404 est alors réitérée (en attente d'un autre dispositif de communication STA susceptible d'appairage, s'il en reste).

La **Fig. 5** illustre schématiquement un algorithme d'appairage implémenté par la passerelle PGW 110, selon un second mode de réalisation ne faisant pas partie de l'invention revendiquée . Dans ce second mode de réalisation, il est considéré que tous les dispositifs STA fournis par le fournisseur d'accès Internet disposent des mêmes données d'authentification (premières données d'authentification dans le cadre de l'algorithme de la Fig. 3). Typiquement, tous les dispositifs de communication STA fournis par le fournisseur d'accès Internet stockent en mémoire une même clef pré-partagée PSK. De plus, il est considéré que tous les dispositifs de communication STA fournis par le fournisseur d'accès Internet stockent en mémoire un même identifiant réseau SSID (pour lequel lesdites données d'authentification sont applicables).

Dans une étape 501, la passerelle RGW 110 crée le réseau local sans-fil WLAN1 121, en lui attribuant un identifiant réseau SSID générique. Cet identifiant réseau SSID générique est inscrit en mémoire de la passerelle RGW 110, par exemple par configuration en usine. Chaque passerelle RGW fournie par le fournisseur d'accès Internet dispose de ce même identifiant réseau SSID générique. C'est ce même identifiant réseau SSID qui est connu de tous les dispositifs de communication STA fournis par le fournisseur d'accès Internet, dans le cadre de ce second mode de réalisation. L'étape 501 est par exemple déclenchée à l'allumage de la passerelle RGW 110 ou lors d'une réinitialisation de la passerelle RGW 110.

Dans une étape 502, la passerelle RGW 110 crée le réseau local sans-fil WLAN2 122, en lui attribuant un identifiant réseau SSID qui lui est propre (typiquement cet identifiant réseau SSID est aussi inscrit sur le boîtier de la passerelle RGW 110). L'identifiant réseau SSID du réseau local sans-fil WLAN2 122 est typiquement inscrit en mémoire de la passerelle RGW 110 en usine, mais peut aussi être modifié par l'utilisateur grâce à un portail de configuration exporté par un serveur Web embarqué par la passerelle RGW 110.

A noter que le réseau local sans-fil WLAN2 122 peut tout à fait être créé avant le réseau local sans-fil WLAN1 121.

Dans une étape 503, la passerelle RGW 110 se met en attente d'une tentative de premier appairage avec le réseau local sans-fil WLAN1 121. La passerelle RGW 110 se met donc en attente de recevoir des premières données d'authentification devant permettre d'appairer un dispositif de communication STA qui a été fourni audit utilisateur par le fournisseur d'accès Internet.

Dans une étape 504, la passerelle RGW 110 a détecté une tentative de premier appairage avec le réseau local sans-fil WLAN1 121. La passerelle RGW 110 obtient, auprès du serveur d'approvisionnement PSERV 100, un descriptif associé à chaque dispositif de communication STA fourni par le fournisseur d'accès Internet au même utilisateur que la passerelle RGW 110. Le serveur d'approvisionnement PSERV 100 peut identifier quel utilisateur est concerné en se basant sur l'identifiant de la passerelle RGW 110. Le fournisseur d'accès Internet maintient donc à jour la base de données DB 101 de sorte que le descriptif de souscription pour chaque utilisateur indique chaque dispositif de communication STA fourni par le fournisseur d'accès Internet audit utilisateur. Le descriptif reçu à l'étape 401 inclut un identifiant (e.g. adresse MAC) du dispositif de communication STA en question.

L'étape 504 peut aussi être déclenchée, indépendamment de l'algorithme de la Fig. 5, sur réception d'un message de la part du serveur d'approvisionnement PSERV 100, par exemple lorsque le fournisseur d'accès Internet fournit un nouveau dispositif de communication STA au même utilisateur que la passerelle RGW 110. L'étape 504 peut aussi être déclenchée par interrogation régulière du serveur d'approvisionnement PSERV 100 par la passerelle RGW 110 et détection que le fournisseur d'accès Internet a fourni un nouveau dispositif de communication STA au même utilisateur que la passerelle RGW 110.

Dans une étape 505, la passerelle RGW 110 analyse si cette tentative de premier appairage provient d'un dispositif de communication STA qui correspond à celui dont le descriptif a été obtenu à l'étape 504. Dans sa tentative d'appairage, le dispositif de communication STA en question a fourni des premières données d'authentification qui sont censées correspondre à des données d'authentification par défaut connues de la passerelle RGW 110. Ces données d'authentification par défaut sont inscrites en mémoire de la passerelle RGW 110, par exemple par configuration en usine, tout comme l'identifiant réseau SSID générique susmentionné. Chaque passerelle RGW fournie par le fournisseur d'accès Internet dispose de ces mêmes données d'authentification par défaut.

Si cette tentative de premier appairage provient d'un dispositif de communication STA qui correspond à celui dont le descriptif a été obtenu à l'étape 504, la passerelle RGW 110 considère que la tentative de premier appairage avec le réseau local sans-fil WLAN1 121 est conforme, et une étape 507 est alors effectuée. Sinon, la passerelle RGW 110 considère que la tentative de premier appairage avec le réseau local sans-fil WLAN1 121 n'est pas conforme, et une étape 506 est alors effectuée.

Dans l'étape 506, la passerelle RGW 110 rejette le premier appairage avec le réseau local sans-fil WLAN1 121, et en informe le dispositif de communication STA en question. La passerelle RGW 110 se remet alors en attente d'une tentative de premier appairage avec le réseau local sans-fil WLAN1 121, en réitérant l'étape 503.

Dans l'étape 507, la passerelle RGW 110 accepte le premier appairage avec le réseau local sans-fil sécurisé WLAN1 121 et confirme le succès du premier appairage auprès du dispositif de communication STA en question. Le fait que le premier appairage ait été un succès assure que le dispositif STA en question a effectivement été fourni au même utilisateur que la passerelle RGW 110, puisque ledit dispositif de communication STA était explicitement identifié dans le descriptif reçu à l'étape 504.

Dans une étape 508, la passerelle RGW 110 envoie au dispositif de communication STA en question des secondes données d'authentification via le réseau local sans-fil sécurisé WLAN1 121. Ces secondes données d'authentification sont accompagnées de l'identifiant réseau SSID du réseau local sans-fil sécurisé WLAN2 122.

Ces secondes données d'authentification permettent au dispositif de communication STA en question d'être authentifié dans le cadre de l'appairage avec le réseau local sans-fil sécurisé WLAN2 122. Préférentiellement, ces secondes données d'authentification sont un secret. Ces secondes données d'authentification peuvent être accompagnées d'un type de chiffrement (par exemple WPA ou WPA2) associé.

Comme déjà évoqué, ces secondes données d'authentification et l'identifiant réseau SSID qui les accompagne sont préférentiellement transmis au dispositif de communication STA en question selon un protocole propriétaire, reposant par exemple sur le protocole TCP ou sur le protocole SNMP.

Dans une étape 509, la passerelle RGW 110 se met en attente de second appairage avec le réseau local sans-fil sécurisé WLAN2 122. Le dispositif de communication STA en question est censé utiliser les secondes données d'authentification transmises à l'étape 508. Si tel est le cas, l'étape 503 est réitérée (en attente d'un autre dispositif de communication STA susceptible d'appairage, s'il en reste). Sinon, l'étape 506 est effectuée (non montré sur la Fig. 5).

Lorsque le second mode de réalisation abordé en relation avec la Fig. 5 est implémenté, il se peut qu'un dispositif de communication STA fourni à un utilisateur détecte plusieurs réseaux locaux sans-fil WLAN sécurisés qui sont identifiés par l'identifiant réseau SSID générique susmentionné. Cette situation survient par exemple quand des voisins utilisent des passerelles RGW provenant du même fournisseur d'accès Internet. Cette situation est résolue par les vérifications effectuées par les passerelles RGW dans le cadre des tentatives de premier appairage susmentionnées. En effet, chacune des passerelles RGW vérifie auprès du serveur d'approvisionnement PSERV 100 que l'identifiant (e.g. adresse MAC) de chaque dispositif de communication STA qui effectue une tentative d'appairage correspond effectivement à un identifiant de dispositif de communication STA qui a été fourni au même utilisateur que la passerelle RGW en question. Il est alors assuré qu'un utilisateur ne peut pas effectuer par erreur un appairage comme décrit, avec la passerelle RGW de son voisin.

## Revendications

1. Procédé d'appairage, dans lequel une passerelle (110) sert de point d'accès sans-fil à au moins un premier réseau local sans-fil sécurisé (121) et à un second réseau local sans-fil sécurisé (122) la passerelle interconnectant le second réseau local sans-fil sécurisé et un réseau étendu (120) de sorte que chaque dispositif de communication (112) appairé avec le second réseau local sans-fil sécurisé peut accéder à des services offerts via le réseau étendu, un serveur d'approvisionnement (100) étant connecté au réseau étendu, le procédé étant implémenté par la passerelle et comportant les étapes suivantes :
- détecter (404) une tentative de premier appairage d'un dispositif de communication (111) avec un dit premier réseau local sans-fil sécurisé, dans laquelle le dispositif de communication est identifié et fournit des premières données d'authentification ;
- vérifier que les premières données d'authentification correspondent à des données d'authentification attendues par la passerelle vis-à-vis dudit premier réseau local sans-fil sécurisé ;
- en cas de vérification positive, confirmer (407) le premier appairage avec ledit premier réseau local sans-fil sécurisé et transmettre (408) audit dispositif de communication via ledit premier réseau local sans-fil sécurisé des secondes données d'authentification ainsi qu'un identifiant réseau du second réseau local sans-fil sécurisé ;
- détecter (409) une tentative de second appairage du dispositif de communication avec le second réseau local sans-fil sécurisé, dans laquelle le dispositif de communication fournit d'autres données d'authentification ;
- vérifier que lesdites autres données d'authentification correspondent auxdites secondes données d'authentification ; et
- en cas de vérification positive, confirmer le second appairage avec le second réseau local sans-fil sécurisé, de sorte à permettre audit dispositif de communication d'accéder auxdits services offerts via le réseau étendu,
la passerelle ne permettant pas d'accéder, par le biais du premier réseau local sans-fil sécurisé, aux services offerts via le réseau étendu, le procédé comportant en outre l'étape suivante pour confirmer (407) le premier appairage avec ledit premier réseau local sans-fil sécurisé :
- vérifier (401, 405) auprès du serveur d'approvisionnement que ledit dispositif de communication est associé à un même utilisateur que la passerelle,
et, pour vérifier que ledit dispositif de communication est associé au même utilisateur que la passerelle et pour vérifier que les premières données d'authentification correspondent aux données d'authentification attendues, la passerelle, avant que la tentative de premier appairage du dispositif de communication (111) avec un dit premier réseau local sans-fil sécurisé ne puisse être détectée par celle-ci, reçoit (401) du serveur d'approvisionnement un descriptif incluant, pour chaque dispositif de communication parmi un ensemble de dispositifs de communication susceptibles d'appairage avec le second réseau local sans-fil sécurisé :
- un identifiant de dispositif de communication,
- un identifiant réseau, et
- des données d'authentification attendues vis-à-vis du premier réseau local sans-fil sécurisé ;
et le procédé comprenant en outre, après réception dudit descriptif et avant que ladite tentative de premier appairage ne puisse être détectée par la passerelle, la passerelle crée (402) un dit premier réseau local sans-fil sécurisé pour chaque dispositif de communication parmi ledit ensemble de dispositifs de communication susceptibles d'appairage avec le second réseau local sans-fil sécurisé, en attribuant audit premier réseau local sans-fil sécurisé l'identifiant réseau du descriptif du dispositif de communication correspondant.

2. Procédé selon la revendication 1, **caractérisé en ce que**, lorsque le second appairage avec le second réseau local sans-fil sécurisé pour un dispositif de communication parmi ledit ensemble de dispositifs de communication susceptibles d'appairage est confirmé, la passerelle arrête (410) le premier réseau local sans-fil sécurisé créé pour ledit dispositif de communication.

3. Procédé selon la revendication 1 ou 2, **caractérisé en ce que** chaque premier réseau local sans-fil sécurisé et le second réseau local sans-fil sécurisé sont de type Wi-Fi.

4. Programme d'ordinateur, **caractérisé en ce qu'**il comprend des instructions pour implémenter, par un processeur (200) d'une passerelle (110), le procédé selon l'une quelconque des revendications 1 à 3, lorsque ledit programme est exécuté par ledit processeur.

5. Support de stockage d'informations (203) **caractérisé en ce qu'**il stocke un programme d'ordinateur comprenant des instructions pour implémenter, par un processeur (200) d'une passerelle (110), le procédé selon l'une quelconque des revendications 1 à 3, lorsque ledit programme est exécuté par ledit processeur.

6. Passerelle (110) configurée pour servir de point d'accès sans-fil à au moins un premier réseau local sans-fil sécurisé (121) et à un second réseau local sans-fil sécurisé (122), la passerelle interconnectant le second réseau local sans-fil sécurisé et un réseau étendu (WAN 120) de sorte que chaque dispositif de communication (112) appairé avec le second réseau local sans-fil sécurisé peut accéder à des services offerts via le réseau étendu, un serveur d'approvisionnement (100) étant connecté au réseau étendu, la passerelle (110) comportant:
- des moyens pour détecter (404) une tentative de premier appairage d'un dispositif de communication (111) avec un dit premier réseau local sans-fil sécurisé, dans laquelle le dispositif de communication est identifié et fournit des premières données d'authentification ;
- des moyens pour vérifier que les premières données d'authentification correspondent à des données d'authentification attendues par la passerelle vis-à-vis dudit premier réseau local sans-fil sécurisé ;
- des moyens pour confirmer (407), en cas de vérification positive, le premier appairage avec ledit premier réseau local sans-fil sécurisé et pour transmettre (408) audit dispositif de communication via ledit premier réseau local sans-fil sécurisé des secondes données d'authentification ainsi qu'un identifiant réseau du second réseau local sans-fil sécurisé ;
- des moyens pour détecter (409) une tentative de second appairage du dispositif de communication avec le second réseau local sans-fil sécurisé, dans laquelle le dispositif de communication fournit d'autres données d'authentification ;
- des moyens pour vérifier que lesdites autres données d'authentification correspondent auxdites secondes données d'authentification ; et
- des moyens pour confirmer, en cas de vérification positive, le second appairage avec le second réseau local sans-fil sécurisé, de sorte à permettre audit dispositif de communication d'accéder auxdits services offerts via le réseau étendu, la passerelle étant configurée pour ne pas permettre, par le biais du premier réseau local sans-fil sécurisé, d'accéder aux services offerts via le réseau étendu et la passerelle (110) comportant en outre, pour confirmer, (407) le premier appairage avec ledit premier réseau local sans-fil sécurisé :
- des moyens pour vérifier (401, 405) auprès du serveur d'approvisionnement que ledit dispositif de communication est associé à un même utilisateur que la passerelle,
et, pour vérifier que ledit dispositif de communication est associé au même utilisateur que la passerelle et pour vérifier que les premières données d'authentification correspondent aux données d'authentification attendues, la passerelle (110) comporte en outre des moyens pour, avant que la tentative de premier appairage du dispositif de communication (111) avec un dit premier réseau local sans-fil sécurisé ne puisse être détectée par la passerelle, recevoir (401) du serveur d'approvisionnement un descriptif incluant, pour chaque dispositif de communication parmi un ensemble de dispositifs de communication susceptibles d'appairage avec le second réseau local sans-fil sécurisé :
- un identifiant de dispositif de communication,
- un identifiant réseau, et
- des données d'authentification attendues vis-à-vis du premier réseau local sans-fil sécurisé ;
et la passerelle (110) comportant en outre des moyens pour créer (402), après réception dudit descriptif et avant que ladite tentative de premier appairage du dispositif de communication (111) ne puisse être détectée par la passerelle, un dit premier réseau local sans-fil sécurisé pour chaque dispositif de communication parmi ledit ensemble de dispositifs de communication susceptibles d'appairage avec le second réseau local sans-fil sécurisé, en attribuant audit premier réseau local sans-fil sécurisé l'identifiant réseau du descriptif du dispositif de communication correspondant.

## Patentansprüche

1. Pairing-Verfahren, wobei ein Gateway (110) als Drahtloszugangspunkt zu mindestens einem ersten gesicherten lokalen Drahtlosnetzwerk (121) und zu einem zweiten gesicherten lokalen Drahtlosnetzwerk (122) dient, wobei der Gateway das zweite gesicherte lokale Drahtlosnetzwerk und ein Weitverkehrsnetzwerk (120) so verbindet, dass jede Kommunikationsvorrichtung (112), die mit dem zweiten gesicherten lokalen Drahtlosnetzwerk gepairt ist, auf Dienste zugreifen kann, die über das Weitverkehrsnetzwerk angeboten werden, wobei ein Bereitstellungsserver (100) mit dem Weitverkehrsnetzwerk verbunden ist, wobei das Verfahren von dem Gateway implementiert wird und die folgenden Schritte aufweist:
- Detektieren (404) eines Versuchs eines ersten Pairings einer Kommunikationsvorrichtung (111) mit einem solchen ersten gesicherten lokalen Drahtlosnetzwerk, wobei die Kommunikationsvorrichtung identifiziert wird und erste Authentifizierungsdaten bereitstellt;
- Überprüfen, dass die ersten Authentifizierungsdaten Authentifizierungsdaten entsprechen, die von dem Gateway gegenüber dem ersten gesicherten lokalen Drahtlosnetzwerk erwartet werden;
- bei positiver Überprüfung, Bestätigen (407) des ersten Pairings mit dem ersten gesicherten lokalen Drahtlosnetzwerk und Übertragen (408), an die Kommunikationsvorrichtung über das erste gesicherte lokale Drahtlosnetzwerk, zweiter Authentifizierungsdaten sowie einer Netzwerkkennung des zweiten gesicherten lokalen Drahtlosnetzwerks;
- Detektieren (409) eines Versuchs eines zweiten Pairings der Kommunikationsvorrichtung mit dem zweiten gesicherten lokalen Drahtlosnetzwerk, wobei die Kommunikationsvorrichtung andere Authentifizierungsdaten bereitstellt;
- Überprüfen, dass die anderen Authentifizierungsdaten den zweiten Authentifizierungsdaten entsprechen; und
- bei positiver Überprüfung, Bestätigen des zweiten Pairings mit dem zweiten gesicherten lokalen Drahtlosnetzwerk, um es der Kommunikationsvorrichtung zu gestatten, auf die Dienste zuzugreifen, die über das Weitverkehrsnetzwerk angeboten werden,
wobei es der Gateway nicht gestattet, über das erste gesicherte lokale Drahtlosnetzwerk auf die Dienste zuzugreifen, die über das Weitverkehrsnetzwerk angeboten werden, wobei das Verfahren ferner den folgenden Schritt aufweist, um das erste Pairing mit dem ersten gesicherten lokalen Drahtlosnetzwerk zu bestätigen (407):
- Überprüfen (401, 405) beim Bereitstellungsserver, dass die Kommunikationsvorrichtung einem selben Benutzer wie der Gateway zugeordnet ist,
und, zum Überprüfen, dass die Kommunikationsvorrichtung demselben Benutzer wie der Gateway zugeordnet ist, und zum Überprüfen, dass die ersten Authentifizierungsdaten den erwarteten Authentifizierungsdaten entsprechen, der Gateway, bevor der Versuch des ersten Pairings der Kommunikationsvorrichtung (111) mit einem solchen ersten gesicherten lokalen Drahtlosnetzwerk von diesem detektiert werden kann, vom Bereitstellungsserver eine Beschreibung empfängt (401), die für jede Kommunikationsvorrichtung aus einer Menge von Kommunikationsvorrichtungen, die für Pairing mit dem zweiten gesicherten lokalen Drahtlosnetzwerk geeignet sind, Folgendes aufweist:
- eine Kommunikationsvorrichtungskennung,
- eine Netzwerkkennung, und
- Authentifizierungsdaten, die gegenüber dem ersten gesicherten lokalen Drahtlosnetzwerk erwartet werden;
und das Verfahren ferner umfassend, nach Empfang der Beschreibung und bevor der Versuch des ersten Pairings von dem Gateway detektiert werden kann, der Gateway ein solches erstes gesichertes lokales Drahtlosnetzwerk für jede Kommunikationsvorrichtung aus der Menge von Kommunikationsvorrichtungen erstellt (402), die für Pairing mit dem zweiten gesicherten lokalen Drahtlosnetzwerk geeignet sind, wobei dem ersten gesicherten lokalen Drahtlosnetzwerk die Netzwerkkennung der Beschreibung der entsprechenden Kommunikationsvorrichtung zugewiesen wird.

2. Verfahren nach Anspruch 1, **dadurch gekennzeichnet, dass**, wenn das zweite Pairing mit dem zweiten gesicherten lokalen Drahtlosnetzwerk für eine Kommunikationsvorrichtung aus der Menge von Kommunikationsvorrichtungen, die für Pairing geeignet sind, bestätigt ist, der Gateway das erste gesicherte lokale Drahtlosnetzwerk, das für die Kommunikationsvorrichtung erstellt ist, anhält (410).

3. Verfahren nach Anspruch 1 oder 2, **dadurch gekennzeichnet, dass** jedes erste gesicherte lokale Drahtlosnetzwerk und das zweite gesicherte lokale Drahtlosnetzwerk vom Wi-Fi-Typ sind.

4. Computerprogramm, **dadurch gekennzeichnet, dass** es Anweisungen umfasst, um durch einen Prozessor (200) eines Gateways (110) das Verfahren nach einem der Ansprüche 1 bis 3 durchzuführen, wenn das Programm von dem Prozessor ausgeführt wird.

5. Informationsspeichermedium (203), **dadurch gekennzeichnet, dass** ein Computerprogramm darauf gespeichert ist, das Anweisungen umfasst, um durch einen Prozessor (200) eines Gateways (110) das Verfahren nach einem der Ansprüche 1 bis 3 durchzuführen, wenn das Programm von dem Prozessor ausgeführt wird.

6. Gateway (110), der dazu ausgebildet ist, als Drahtloszugangspunkt zu mindestens einem ersten gesicherten lokalen Drahtlosnetzwerk (121) und zu einem zweiten gesicherten lokalen Drahtlosnetzwerk (122) zu dienen, wobei der Gateway das zweite gesicherte lokale Drahtlosnetzwerk und ein Weitverkehrsnetzwerk (WAN 120) so verbindet, dass jede Kommunikationsvorrichtung (112), die mit dem zweiten gesicherten lokalen Drahtlosnetzwerk gepairt ist, auf Dienste zugreifen kann, die über das Weitverkehrsnetzwerk angeboten werden, wobei ein Bereitstellungsserver (100) mit dem Weitverkehrsnetzwerk verbunden ist, der Gateway (110) aufweisend:
- Mittel zum Detektieren (404) eines Versuchs eines ersten Pairings einer Kommunikationsvorrichtung (111) mit einem solchen ersten gesicherten lokalen Drahtlosnetzwerk, wobei die Kommunikationsvorrichtung identifiziert wird und erste Authentifizierungsdaten bereitstellt;
- Mittel zum Überprüfen, dass die ersten Authentifizierungsdaten Authentifizierungsdaten entsprechen, die von dem Gateway gegenüber dem ersten gesicherten lokalen Drahtlosnetzwerk erwartet werden;
- Mittel zum Bestätigen (407), bei positiver Überprüfung, des ersten Pairings mit dem ersten gesicherten lokalen Drahtlosnetzwerk und zum Übertragen (408), an die Kommunikationsvorrichtung über das erste gesicherte lokale Drahtlosnetzwerk, zweiter Authentifizierungsdaten sowie einer Netzwerkkennung des zweiten gesicherten lokalen Drahtlosnetzwerks;
- Mittel zum Detektieren (409) eines Versuchs eines zweiten Pairings der Kommunikationsvorrichtung mit dem zweiten gesicherten lokalen Drahtlosnetzwerk, wobei die Kommunikationsvorrichtung andere Authentifizierungsdaten bereitstellt;
- Mittel zum Überprüfen, dass die anderen Authentifizierungsdaten den zweiten Authentifizierungsdaten entsprechen; und
- Mittel zum Bestätigen, bei positiver Überprüfung, des zweiten Pairings mit dem zweiten gesicherten lokalen Drahtlosnetzwerk, um es der Kommunikationsvorrichtung zu gestatten, auf die Dienste zuzugreifen, die über das Weitverkehrsnetzwerk angeboten werden, wobei der Gateway dazu ausgebildet ist, es nicht zu gestatten, über das erste gesicherte lokale Drahtlosnetzwerk auf die Dienste zuzugreifen, die über das Weitverkehrsnetzwerk angeboten werden, und der Gateway (110) ferner zur Bestätigung (407) des ersten Pairings mit dem ersten gesicherten lokalen Drahtlosnetzwerks Folgendes aufweist:
- Mittel zum Überprüfen (401, 405), beim Bereitstellungsserver, dass die Kommunikationsvorrichtung einem selben Benutzer wie der Gateway zugeordnet ist,
und zum Überprüfen, dass die Kommunikationsvorrichtung demselben Benutzer wie der Gateway zugeordnet ist, und zum Überprüfen, dass die ersten Authentifizierungsdaten den erwarteten Authentifizierungsdaten entsprechen, der Gateway (110) ferner Mittel aufweist, um, bevor der Versuch des ersten Pairings der Kommunikationsvorrichtung (111) mit einem solchen ersten gesicherten lokalen Drahtlosnetzwerk vom Gateway detektiert werden kann, vom Bereitstellungsserver eine Beschreibung zu empfangen (401), die für jede Kommunikationsvorrichtung aus einer Menge von Kommunikationsvorrichtungen, die für Pairing mit dem zweiten gesicherten lokalen Drahtlosnetzwerk geeignet sind, Folgendes aufweist:
- eine Kommunikationsvorrichtungskennung,
- eine Netzwerkkennung, und
- Authentifizierungsdaten, die gegenüber dem ersten gesicherten lokalen Drahtlosnetzwerk erwartet werden;
wobei der Gateway (110) ferner Mittel zum Erstellen (402), nach Empfang der Beschreibung und bevor der Versuch des ersten Pairings der Kommunikationsvorrichtung (111) von dem Gateway detektiert werden kann, eines solchen ersten gesicherten lokalen Drahtlosnetzwerks für jede Kommunikationsvorrichtung aus der Menge von Kommunikationsvorrichtungen, die für Pairing mit dem zweiten gesicherten lokalen Drahtlosnetzwerk geeignet sind, aufweist, wobei dem ersten gesicherten lokalen Drahtlosnetzwerk die Netzwerkkennung der Beschreibung der entsprechenden Kommunikationsvorrichtung zugewiesen wird.

## Claims

1. Pairing method, in which a gateway (110) serves as a wireless access point to at least one first secure wireless local area network (121) and to a second secure wireless local area network (122), the gateway interconnecting the second secure wireless local area network and a wide area network (120) such that each communication device (112) paired with the second secure wireless local area network is able to access services offered via the wide area network, a provisioning server (100) being connected to the wide area network, the method being implemented by the gateway and comprising the following steps:
- detecting (404) a first pairing attempt by a communication device (111) to pair with a said first secure wireless local area network, in which the communication device is identified and provides first authentication data;
- checking that the first authentication data correspond to authentication data expected by the gateway in relation to said first secure wireless local area network;
- in the event of a positive check, confirming (407) the first pairing with said first secure wireless local area network and transmitting (408) second authentication data and a network identifier of the second secure wireless local area network to said communication device via said first secure wireless local area network;
- detecting (409) a second pairing attempt by the communication device to pair with the second secure wireless local area network, in which the communication device provides different authentication data;
- checking that said different authentication data correspond to said second authentication data; and
- in the event of a positive check, confirming the second pairing with the second secure wireless local area network, so as to allow said communication device to access said services offered via the wide area network,
the gateway not allowing the services offered via the wide area network to be accessed via the first secure wireless local area network, the method furthermore comprising the following step in order to confirm (407) the first pairing with said first secure wireless local area network:
- checking (401, 405) with the provisioning server that said communication device is associated with the same user as the gateway,
and, in order to check that said communication device is associated with the same user as the gateway and in order to check that the first authentication data correspond to the expected authentication data, the gateway, before the first pairing attempt by the communication device (111) to pair with a said first secure wireless local area network is able to be detected thereby, receives (401) from the provisioning server a descriptor including, for each communication device from among a set of communication devices likely to pair with the second secure wireless local area network:
- a communication device identifier,
- a network identifier, and
- expected authentication data in relation to the first secure wireless local area network;
and the method furthermore comprising, after receiving said descriptor and before said first pairing attempt is able to be detected by the gateway, the gateway creates (402) a said first secure wireless local area network for each communication device from among said set of communication devices likely to pair with the second secure wireless local area network, by assigning said first secure wireless local area network the network identifier of the descriptor of the corresponding communication device.

2. Method according to Claim 1, **characterized in that**, when the second pairing with the second secure wireless local area network for one communication device from among said set of communication devices likely to pair is confirmed, the gateway shuts down (410) the first secure wireless local area network created for said communication device.

3. Method according to Claim 1 or 2, **characterized in that** each first secure wireless local area network and the second secure wireless local area network are of Wi-Fi type.

4. Computer program, **characterized in that** it comprises instructions for a processor (200) of a gateway (110) to implement the method according to any one of Claims 1 to 3 when said program is executed by said processor.

5. Information storage medium (203), **characterized in that** it stores a computer program comprising instructions for a processor (200) of a gateway (110) to implement the method according to any one of Claims 1 to 3 when said program is executed by said processor.

6. Gateway (110) configured so as to serve as a wireless access point to at least one first secure wireless local area network (121) and to a second secure wireless local area network (122), the gateway interconnecting the second secure wireless local area network and a wide area network (WAN 120) such that each communication device (112) paired with the second secure wireless local area network is able to access services offered via the wide area network, a provisioning server (100) being connected to the wide area network, the gateway (110) comprising:
- means for detecting (404) a first pairing attempt by a communication device (111) to pair with a said first secure wireless local area network, in which the communication device is identified and provides first authentication data;
- means for checking that the first authentication data correspond to authentication data expected by the gateway in relation to said first secure wireless local area network;
- means for confirming (407), in the event of a positive check, the first pairing with said first secure wireless local area network and for transmitting (408) second authentication data and a network identifier of the second secure wireless local area network to said communication device via said first secure wireless local area network;
- means for detecting (409) a second pairing attempt by the communication device to pair with the second secure wireless local area network, in which the communication device provides different authentication data;
- means for checking that said different authentication data correspond to said second authentication data; and
- means for confirming, in the event of a positive check, the second pairing with the second secure wireless local area network, so as to allow said communication device to access said services offered via the wide area network, the gateway being configured so as not to allow the services offered via the wide area network to be accessed via the first secure wireless local area network, and the gateway (110) furthermore comprising, in order to confirm (407) the first pairing with said first secure wireless local area network:
- means for checking (401, 405) with the provisioning server that said communication device is associated with the same user as the gateway,
and, in order to check that said communication device is associated with the same user as the gateway and in order to check that the first authentication data correspond to the expected authentication data, the gateway (110) furthermore comprises means for, before the first pairing attempt by the communication device (111) to pair with a said first secure wireless local area network is able to be detected by the gateway, receiving (401) from the provisioning server a descriptor including, for each communication device from among a set of communication devices likely to pair with the second secure wireless local area network:
- a communication device identifier,
- a network identifier, and
- expected authentication data in relation to the first secure wireless local area network;
and the gateway (110) furthermore comprising means for creating (402), after receiving said descriptor and before said first pairing attempt by the communication device (111) is able to be detected by the gateway, a said first secure wireless local area network for each communication device from among said set of communication devices likely to pair with the second secure wireless local area network, by assigning said first secure wireless local area network the network identifier of the descriptor of the corresponding communication device.
